# EUROPEAN PATENT APPLICATION

(11) **EP 1 967 318 A1**
(43) Date of publication of application: **10.09.2008**
(21) Application number: 07107033.8
(22) Date of filing: 26.04.2007
(51) Int. Cl.: B23K 37/04, B25B 5/00, B25B 5/06, B25B 5/08, B25B 5/12, B25B 5/16

(54) **Device for locating and locking in position elements of pressed sheet metal with an auxiliary body having passages for fitting pipes**

(30) Priority: 06.03.2007 EP 07425129
(71) Applicant: COMAU S.p.A., 10095 Grugliasco (Torino) (IT)
(72) Inventor: Monti, Denny, I-10093, Collegno (Torino) (IT); Bossotto, Piero, I-10146, Torino (IT)
(74) Representative: Notaro, Giancarlo

(57) **Abstract**

The present application relates to a device (10) for locating and clamping in position elements made of pressed sheet metal provided with a fluid actuator (26) for control of a mobile element (24) for clamping the sheet-metal elements. On one side of the body (26a) of the fluid actuator (26), an auxiliary body (36) is provided, within which passages are made that set in communication the two chambers of the actuator (36) with fittings (28) for connection of the flexible pipes (30) for the air entering and leaving the actuator (26). In this way, the aforesaid fittings (28) can be arranged adjacent to a bottom end of the actuator (26) so that the aforesaid flexible pipes (30) do not present free stretches and are exposed on the side of the body of the actuator (26).

## Description

The present invention relates to devices for locating and clamping in position elements made of pressed sheet metal, of the type comprising:
- a first element for supporting the sheet-metal elements, rigidly connected to a fixed supporting structure;
- a second element for clamping the sheet-metal elements, supported by the aforesaid fixed supporting structure in a way displaceable between an inoperative position, set at a distance from the first, supporting, element and an operative position in which it is adjacent to the first, supporting, element and co-operates therewith for clamping the aforesaid sheet-metal elements; and
- a fluid actuator for control of the second, clamping, element, having a body carried by the supporting structure, and a plunger mounted slidably within the body in a main direction and connected to an actuation stem of the clamping element, said plunger defining within the body two chambers having two respective ports designed to operate selectively, one as inlet and the other as outlet, or vice versa, said ports being in communication, respectively, with two inlet and outlet fittings for the connection of flexible pipes for feed and discharge of the fluid to/from the actuator.

A locating and clamping device of the type referred to above is, for example, known from the document No. EP-A-0 909 607, filed in the name of the present applicant. Devices of the type referred to above are used, for example, in the automobile industry during execution of operations of welding of motor-vehicle bodies, or subassemblies thereof, in order to hold the sheet-metal elements to be welded in a correct position of assembly during execution of the weld.

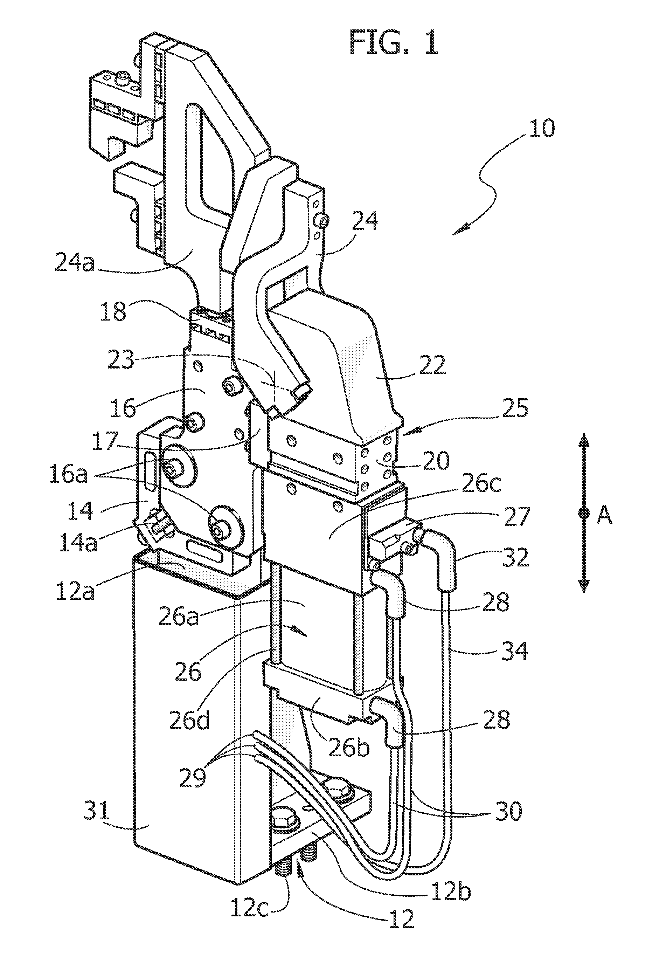

Figure 1 of the annexed plate of drawings illustrates a perspective view of a device according to the known art, specifically built in conformance with the teachings of EP-A-0 909 607. The device, designated as a whole by the reference number 10, comprises a fixed bottom supporting structure 12 constituted by an upright including a vertical plate 12a, rigidly connected to a horizontal base plate 12b, which can be fixed by means of screws 12c to any load-bearing structure, for example a floor, under which the channels or ducts for the electrical and fluid supplies to the clamping devices are set, arranged, for example, in a position corresponding to a station for assembly of a motor-vehicle component.

Fixed by means of a pair of screws 16a to the vertical plate 12a forming part of the fixed supporting structure 12 is a further plate 16. In accordance with the teachings of EP-A-0 909 607, the plate 16 is used for supporting both a fixed supporting element 18, on which the sheet-metal elements to be welded are to rest, and an entire assembly 25 comprising a pneumatic cylinder 26 and a mobile clamping member 24, controlled by the cylinder 26. The clamping member 24 has a structure oscillating about an axis 23 between the closed position illustrated in Figure 1, in which it presses with a portion 24a thereof the sheet-metal elements (not visible in Figure 1) against the fixed supporting element 18, and an open position, in which the aforesaid portion 24a is set at a distance from the fixed supporting element 18, to enable insertion of the sheet-metal elements before the operation of welding, or removal of the sheet-metal elements once welding is completed.

Thanks to the arrangement described above, in which both the fixed supporting element 18 and the mobile clamping element 24 are supported by the plate 16, it is possible to adjust the elements 18, 24 simultaneously in position with respect to the fixed supporting structure by means of adjustment of the position of the plate 16. This can be done conveniently, in accordance with the teachings of EP-A-0 909 607, in so far as the screws 16a that fix the plate 16 to the plate 12a engage holes of enlarged diameter made in the plate 16. Once the screws 16a have been loosened off, the plate 16 can be adjusted in position by shifting it in any direction in its own plane, causing it to slide over the surface of the fixed plate 12a with which it is in contact. Once said operation of adjustment has been performed, upon initial installation of the device, the screws 16a are tightened, after which welded to the plate 12a is a bracket element 14 having a horizontal arm and a vertical arm, which are designed to constitute an immediate reference of the correct position for assembly of the plate 16, since they are designed to co-operate, possibly with interposition of adjustment shims, with a horizontal bottom face and a vertical side face of the plate 16. A screw 14a is used for direct connection between the bracket element 14 and the plate 16. Thanks to the pre-arrangement of the bracket element 14, in the case where the plate 16 has to be temporarily removed, for example for operations of maintenance on the assembly 25, it can in any case be rapidly assembled again in the correct position of installation, thanks to the reference constituted by the bracket element 14.

With reference again to the assembly 25 including the pneumatic actuator 26, the body of said actuator is fixed at its top end to a block 20, which is in turn fixed to the plate 16 via an intermediate plate 17 that is screwed both to the plate 16 and to the block 20. The block 20 in turn supports a structure 22, within which a mechanical transmission is set (not visible in Figure 1), which connects the stem of the pneumatic actuator 26 with the mobile member 24 in such a way as to convert the movement of translation of the stem of the actuator 26 into a movement of oscillation of the clamping element 24 about the axis 23.

The pneumatic actuator 26 has unified dimensions according to the standards defined for devices of the type illustrated herein. The body of the actuator comprises a main section 26a and two end heads 26b, 26c, which are secured against the main section 26a by means of tie-rods 26d.

Mounted slidably within the body of the actuator 26 is a plunger (not visible in Figure 1). As viewed in the drawing, the direction of sliding of the plunger of the actuator 26 is substantially vertical (see arrows A) and corresponds to the main direction of the actuator. The plunger of the actuator defines within the latter two variable-volume chambers (not visible in the drawing), which are to be set selectively, one in communication with a pipe for supplying compressed air and the other with a discharge pipe, or vice versa. The plunger of the actuator is moreover connected to a stem (not visible) that is connected via the above-mentioned mechanical transmission to the mobile member 24.

The constructional details of the pneumatic actuator 26, with particular reference to its internal structure, to the plunger of the actuator, to the stem connected to the plunger, and to the mechanical transmission that connects the stem of the actuator to the mobile member 24, are not described or illustrated herein in order to simplify the drawing. They are in any case in conformance with to the conventional art.

Mounted on the side of the pneumatic actuator 26 that is more distant from the plate 16 are two fittings 28 and a connector 32. The two fittings 28 are used for connecting flexible pipes 30, respectively, to two ports (not visible) made in the body of the pneumatic actuator 26 and communicating with the two chambers of the actuator. The flexible pipes 30 are used selectively, one for supply of compressed air to the pneumatic actuator 26 and the other for discharge of air from the actuator, or vice versa, according to whether the actuator is controlled for causing movement of closing or opening of the mobile member 24. The connector 32 is used for connecting an electrical cable 34 to a sensor device 27 designed to detect the positions of end-of-travel of the mobile element of the actuator 26. The flexible pipes 30 and the cable 34 are run back through guide holes 29 made in a protective casing 31 associated to the fixed supporting structure 12 and are designed to be connected to the ducts and to the supply network provided under the flooring of the assembly station.

As emerges clearly from the foregoing description, the electrical cable 34 and the flexible pipes 30 have relatively long portions that are in no way protected and that are consequently exposed to the environmental conditions of the workstation. This can constitute a problem in the case of automated stations equipped with automatic handling and movement devices and above all can entail the risk of greater deterioration and/or damage to the cables and pipes, for example on account of possible sputtering of molten material that can occur during the operations of welding.

The purpose of the present invention is to provide a device of the type referred to at the start of the present description that is able to overcome the aforesaid drawbacks, with a structure that is relatively simple and inexpensive to produce.

A further purpose of the invention is to provide a device that is able to overcome the aforesaid drawbacks and that can be obtained starting from a device according to the known art with simple operations and with the aid of components that are inexpensive to produce.

The above and further purposes are achieved, according to the present invention, by the fact that set between the two ports associated to the chambers of the fluid actuator and the corresponding fittings used for connection of the flexible pipes for feed and discharge of the fluid to/from the actuator are passages made in at least one auxiliary body associated to the body of the actuator.

In one embodiment, the aforesaid auxiliary body is constituted by a separate element, preferably a stretch of metal section, fixed to the actuator. In an alternative embodiment, the aforesaid auxiliary body is instead made of a single piece with the body of the actuator.

Thanks to the characteristics referred to above, the device according to the invention overcomes the drawbacks of the known art that have been set forth above with means that are relatively simple and present a low cost. In particular, the solution forming the subject of the invention can be obtained starting from a known device of the type illustrated in the annexed Figure 1 in a simple and rapid way through the addition of components having a structure that is extremely simple and inexpensive to produce.

Further characteristics and advantages of the invention will emerge clearly in the course of the ensuing detailed description, provided purely by way of non-limiting example, with reference to the attached plate of drawings, in which:
- Figure 1 is a perspective view in elevation of a locating and clamping device according to the known art;
- Figure 2 is a perspective view in elevation of a first embodiment of the locating and clamping device according to the present invention;
- Figure 3 is a perspective view of the detail indicated by the arrow III in Figure 2;
- Figure 4 is a cross-sectional view of the details of Figure 3, according to the line IV-IV of Figure 3;
- Figure 5 is a cross-sectional view similar to that of Figure 4 but regards a second embodiment of the invention;
- Figure 6 is a perspective view of a body of the actuator, taken by itself, according to the second embodiment;
- Figures 7a and 7b are similar perspective views showing the auxiliary bodies applied to the body of the actuator, according to further embodiments;
- Figures 8a and 8b are perspective views of the supporting structure taken by itself and having integral auxiliary bodies; and
- Figure 9 is a partial perspective view of a locating and clamping device according to the invention, in which the part underneath the flooring F is visible.

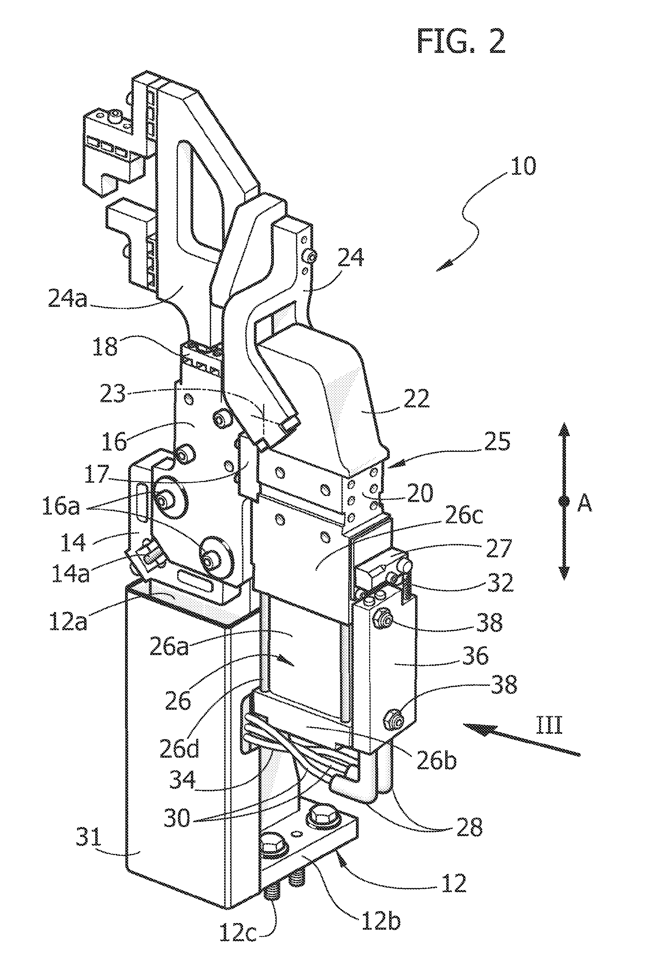

In Figures 2-6 the parts in common to the known device illustrated in Figure 1 are designated by the same reference numbers.

In addition, in the above figures the constructional details regarding the internal structure of the pneumatic actuator and the mechanical transmission that connects the stem of the actuator to the mobile element 24 are not illustrated in so far as they can be made in any known way and in so far as said details, taken in themselves, do not fall within the scope of the present invention. Their elimination from the drawings moreover renders the latter more readily and easily understandable.

With more specific reference to Figure 2, the main difference as compared to the known device illustrated in Figure 1 lies in the fact that, mounted on the side of the pneumatic actuator 26 that is more distant from the plate 16, is a metal element 36 that is preferably constituted by an extruded metal section, with a relatively flattened and elongated shape, with its larger dimension directed parallel to the main direction A of the actuator.

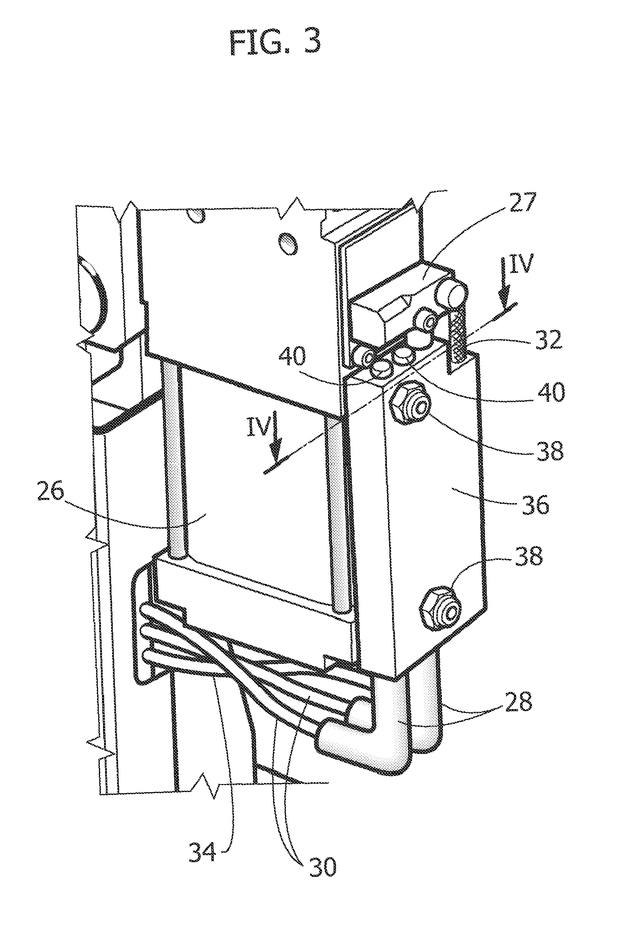

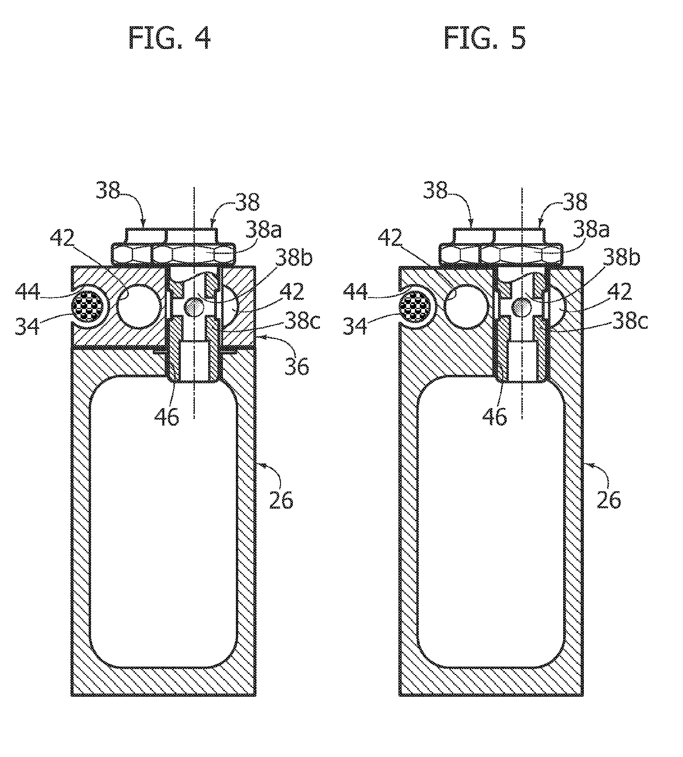

With reference to Figures 3 and 4, the metal section 36 has internally two pipes 42 of circular cross section and set parallel to one another, which extend in the main direction A. On one side of the metal section 36 there is moreover made a longitudinal groove 44 (Figure 4). Said groove 44 is provided for housing the cable 34 and further possible auxiliary connections (not represented) inside. The metal section is produced by means of extrusion or drawing in bars of defined length. From the bar of metal section there can then be cut a blank having an appropriate length for coupling with the corresponding actuator. The assembly of the metal section 36 with the actuator 26 is obtained by means of the tubular screws 38. The metal section 36 to be assembled to the actuator 26 is previously perforated in a direction perpendicular to the pipes 42 in areas corresponding to the inlet and outlet ports (one of which is visible in Figure 4) of the actuator 26, which are constituted by threaded holes 46 (Figure 4).

The tubular screws 38 are constituted by a top portion 38a that has a hexagonal head that is to engage with a tool (not represented) during the operations of installation and removal of the metal section 36 with respect to the actuator 26. The tubular screw 38 moreover has an intermediate portion 38b, in a position corresponding to which radial openings are made, and a bottom portion 38c, screwed into the threaded hole 46. The tubular screw 38 is moreover internally perforated in its main direction, in such a way as to set in communication a bottom end of the bottom portion 38c and the radial openings at the height of the intermediate portion 38b.

Envisaged in a position corresponding to the top end of each pipe 42 is the use of a plug 40 (Figure 3) for closing the pipe. Engaged in a position corresponding to the bottom end of each pipe 42 is a fitting 28, which in turn co-operates with a flexible pipe 30.

In this way, the air coming from one of the two flexible pipes 30 will traverse the fitting 28, the pipe 42 and, through the radial openings and the longitudinal hole of the tubular screw 38, will reach a chamber of the actuator 26. In a complementary way, the air present in the chamber of the plunger that is reducing its own volume will traverse the same path presented above, but in the opposite direction.

As is evident from the foregoing description, in the case of the embodiment illustrated in Figures 2-4 the two fittings 28 for the flexible pipes 30 are shifted underneath the metal section 36 so that the flexible pipes 30 are exposed only in a brief stretch that is in any case protected, in so far as it is set underneath the actuator 26. Likewise, the electrical cable 34 is protected, in its stretch close to the connector 32, within the longitudinal groove 44 of the extruded metal section 36 and is exposed only in a brief portion set underneath the body of the pneumatic actuator 26. It is particularly important to note how the result of a better protection of the flexible pipes and of the electrical cable is obtained with very simple modifications of the known device of Figure 1, which consist basically in the pre-arrangement of the component 36 constituted by a simple extruded metal section.

Figure 5 illustrates a further embodiment of the invention, in which the pipes 42 are made directly in the body of the actuator 26. This can be obtained by means of drawing or extrusion of the entire body of the actuator 26.

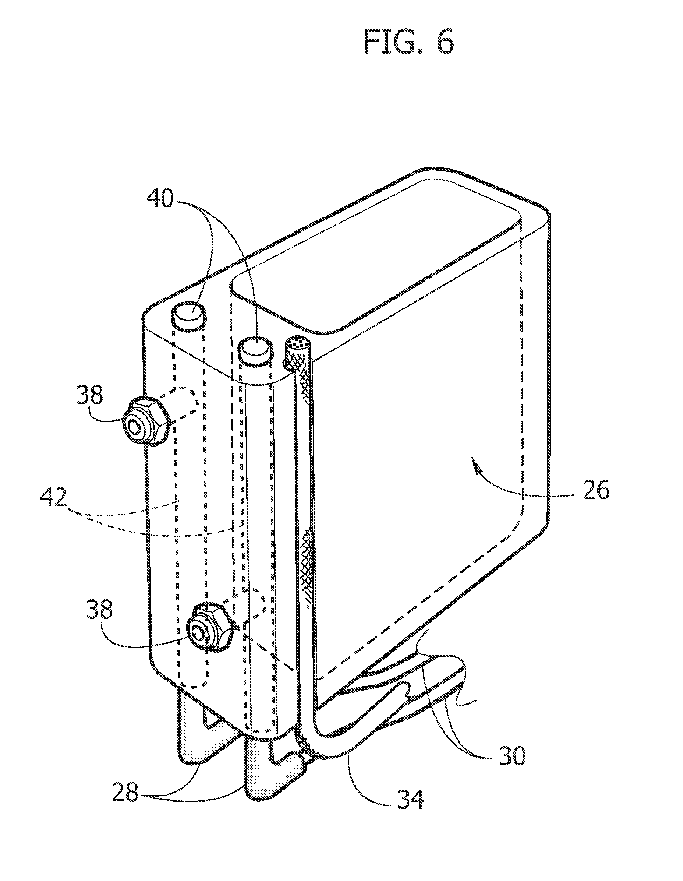

Finally, Figure 6 regards a third embodiment, in which also the stretches of the flexible pipes and of the electrical cable set underneath the body of the pneumatic actuator are protected by means of pre-arrangement of a second metal sectional element 36, set horizontally and as a bracket with respect to the metal sectional element 36 described above, which is provided on one side of the body of the actuator 26. Preferably, the two metal sectional elements 36 are fixed rigidly to one another by means of tubular screws 38 altogether similar to the ones described above. The element 36 set horizontally is also provided with plugs 40 for occlusion of the channels defining the passages for the air through said element.

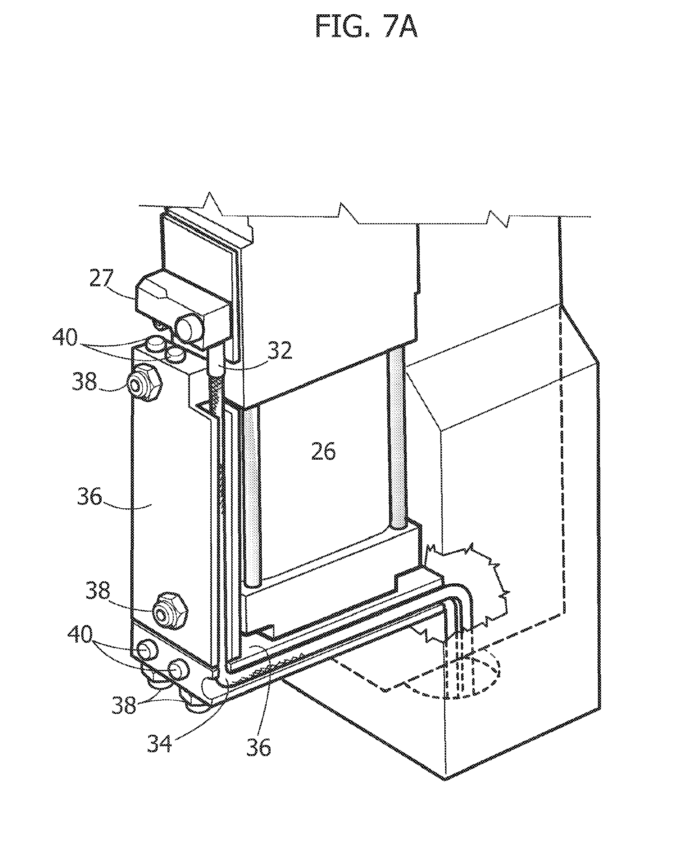

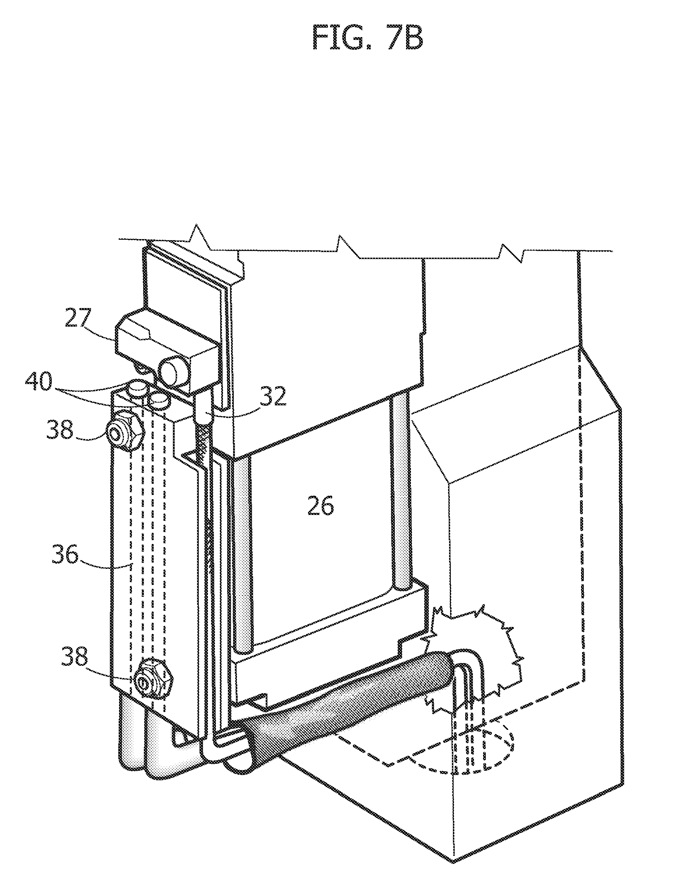

An alternative way with respect to the solution presented in Figure 7a for protecting the portions of the pipes and of the electrical cable, which are arranged underneath the body of the pneumatic actuator is represented in Figure 7b, in which a protective band 48 is provided for protecting the stretch of the cables and of the pipes that run along the bottom end of the actuator 26. The protective band 48 is made of flame-proof material and is folded to form a sleeve and kept closed around the cables and the pipes, for example by means of a Velcro (registered trademark) closing strip.

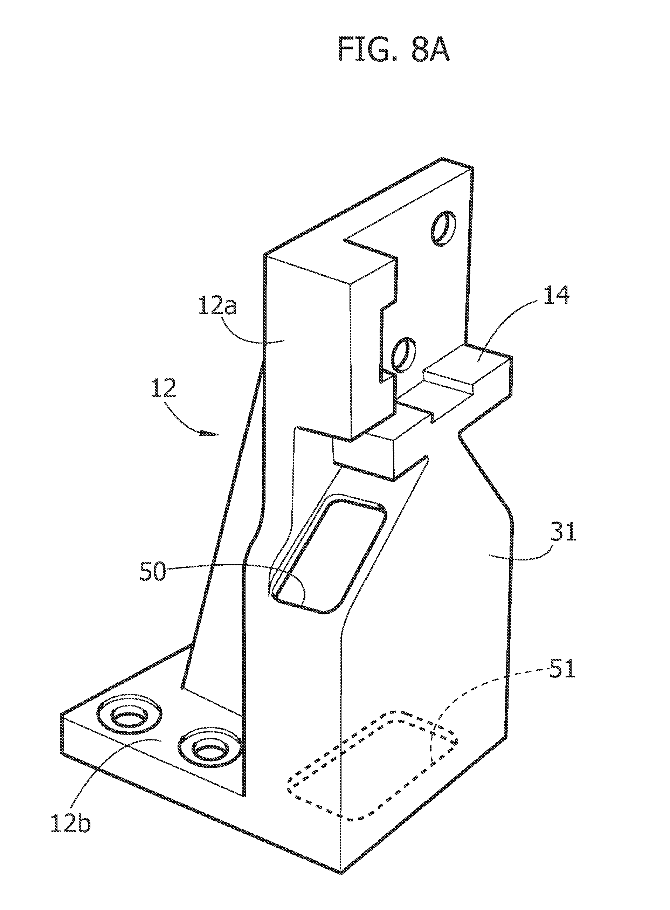

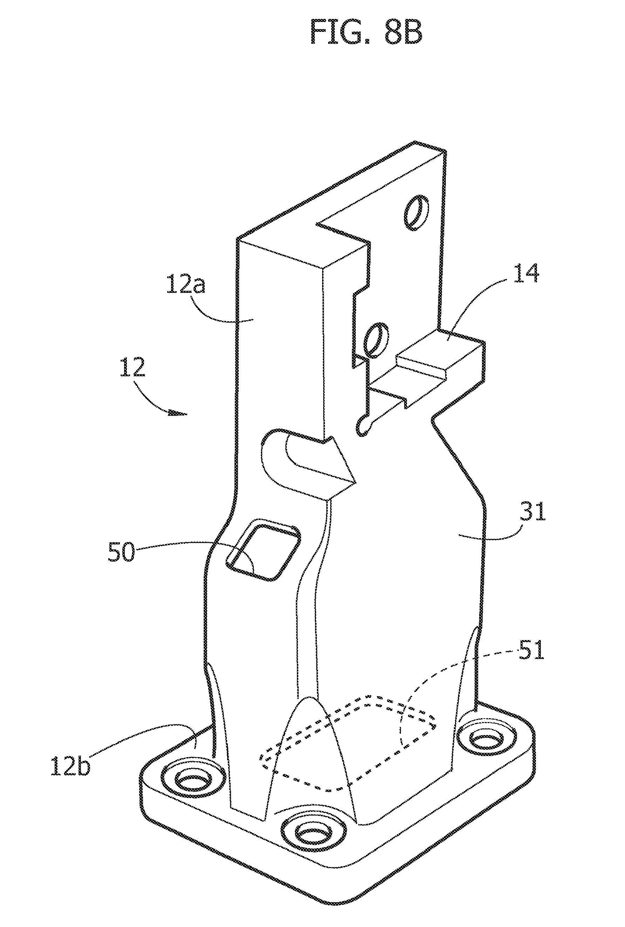

Figures 8a, 8b illustrate in perspective view two variants of the supporting structure 12, in each of which the protective casing 31 is made of a single piece with the structure 12. In this case then, it is the structure 12 itself that defines openings 50 (usable selectively according to the side of installation of the device on the structure 12) for passage of the cables and of the connection pipes. Said passage is possible in so far as an opening 51 is made in the base plate 12b and a corresponding hole (not illustrated) is made in the flooring F for supporting the locating and clamping device. In this way, the pipes and the cables can be conveniently directed underneath the flooring F itself, and there connected to the networks for supply of the assembly station. Said solution guarantees further advantages in terms of a greater protection of the pipes and cables.

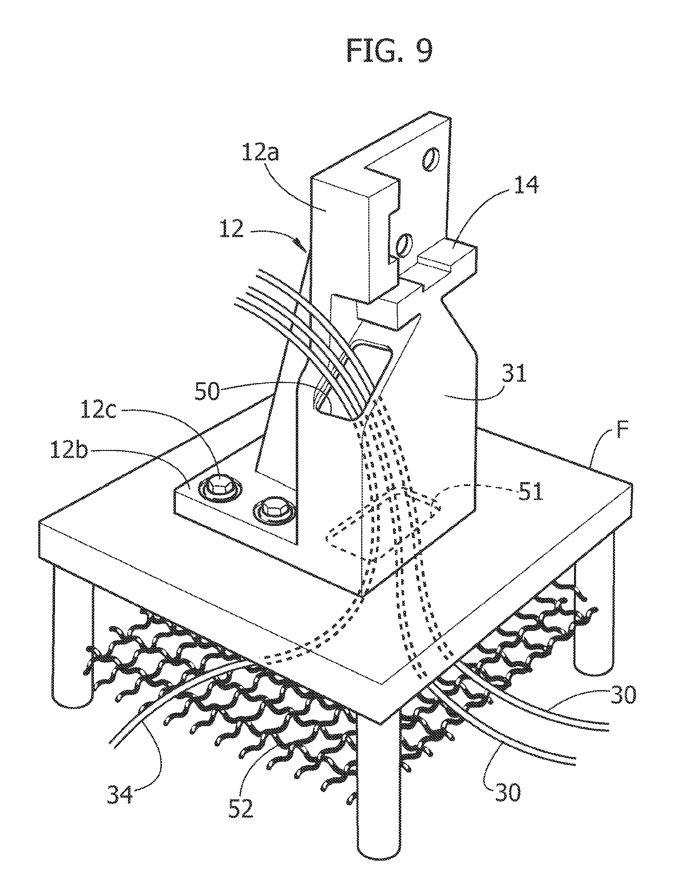

Figure 9 shows again the supporting structure 12 in the condition where it is mounted on the flooring F, underneath which is set a supporting wire net 52, set at a distance from the floor, for supporting the pipes and the cables that connect the various clamping devices associated to a welding station to the corresponding supplies.

As emerges clearly from the foregoing description, all the embodiments of the present invention enable wiring of the lines for feed and discharge of the actuator 26 to be rendered more orderly and cleaner. Furthermore, in this way, any collision or interference between the mobile members possibly provided in the automated assembly station and the flexible pipes for feed and discharge is also prevented. Finally, the action of wear that the environment within the station can have on the pipes and on the cables is markedly reduced, with particular reference to sputtering of molten material during the operations of welding.

Of course, without prejudice to the principle of the invention, the details of construction and the embodiments may vary widely with respect to what is described and illustrated herein purely by way of example, without thereby departing from the scope of the present invention.

## Claims

1. A device for locating and clamping in position components made of pressed sheet metal, comprising:
- a first element (18) for supporting the sheet-metal elements, rigidly connected to a fixed supporting structure (12);
- a second element (24) for clamping the sheet-metal elements, supported by the aforesaid fixed supporting structure (12), in a way displaceable between an inoperative position, set at a distance from the first, supporting, element (18), and an operative position, in which it is adjacent to the first, supporting, element (18) and co-operates therewith for clamping the aforesaid sheet-metal components; and
- a fluid actuator (26) for control of the second, clamping, element (24) having a body carried by the supporting structure (12), mounted slidably within which is a plunger connected to an actuation stem of the clamping element (24) having a main direction, said plunger defining within the body two chambers having two respective ports designed to operate selectively, one as inlet and the other as outlet, or vice versa, said ports being in communication, respectively, with two inlet and outlet fittings (28) for connection of flexible pipes (30) for feed and discharge of the fluid to/from the actuator,
said device being **characterized in that** set between said ports and said fittings (28) are passages (42) made in an auxiliary body associated to the body of the actuator (26).

2. The clamping device according to Claim 1, **characterized in that** said auxiliary body is constituted by at least one separate element, fixed to the body of the actuator.

3. The clamping device according to Claim 2, **characterized in that** said auxiliary body is constituted by a stretch of metal section (36) and **in that** the aforesaid passages (42) are made in the longitudinal direction of the metal section.

4. The clamping device according to Claim 3, **characterized in that** said metal section (36) is fixed to one side of the actuator parallel to the main direction (A) of the actuator via tubular screws (38), directed orthogonally to the longitudinal direction of the metal section, which engage the inlet and outlet ports of the fluid, setting in communication said ports, respectively, with the two passages made longitudinally in the metal section.

5. The clamping device according to Claim 3 or Claim 4, **characterized in that** made on an outer surface of the metal section is at least one longitudinal groove (44) for receiving cables (32) and/or auxiliary pipes of the clamping device.

6. The clamping device according to any one of Claims 3-5, **characterized in that** the stretch of metal section (36) has the shape of a substantially flattened plate, with a face applied to one side of the actuator, the width of which is approximately the same as that of the side of the actuator.

7. The clamping device according to Claim 1, **characterized in that** the auxiliary body is made of a single piece with the body of the actuator.

8. The clamping device according to Claim 7, **characterized in that** made on an outer surface of the body is at least one longitudinal groove (44) for receiving cables (32) and/or auxiliary pipes of the clamping device.

9. The clamping device according to Claim 4, **characterized in that** a further metal section (36), set horizontally, is connected to a bottom end of the metal section (36) fixed to the side of the actuator (26) by means of tubular screws (38), the aforesaid tubular screws (38) setting in communication the respective passages (42) made longitudinally in both of the metal sections.

10. The clamping device according to Claim 1, **characterized in that** a protective band (48) made of flame-proof material is folded to form a sleeve and kept closed around the cables and pipes.

11. The clamping device according to Claim 1, **characterized in that** the fittings are both located in the proximity of a bottom portion of the body.

12. The clamping device according to Claim 1, **characterized in that** the supporting structure (12) incorporates integrally a protective casing (31) for protecting the service pipes and cables.

13. The clamping device according to Claim 12, **characterized in that** the supporting structure (12) comprises a metal body made of a single piece, including a base plate (12b), and a vertical plate (12a), which rises from the base plate (12b) and incorporates the aforesaid casing (31).

14. The clamping device according to Claim 11, **characterized in that** the base plate has an opening (51), through which the pipes and cables can be run underneath the base plate (12b) and the flooring (F).

15. The clamping device according to Claim 1, **characterized in that** a wire net (52) is set horizontally underneath the base plate (12b) and the flooring (F) and is set at a distance both from these and from the resting surface of the supporting structure on a floor for supporting the supply cables and/or pipes.

## Amended claims

### Amended claims in accordance with Rule 137(2) EPC.

**1.** A device for locating and clamping in position components made of pressed sheet metal, comprising:
- a first element (18) for supporting the sheet-metal elements, rigidly connected to a fixed supporting structure (12);
- a second element (24) for clamping the sheet-metal elements, supported by the aforesaid fixed supporting structure (12), in a way displaceable between an inoperative position, set at a distance from the first, supporting, element (18), and an operative position, in which it is adjacent to the first, supporting, element (18) and co-operates therewith for clamping the aforesaid sheet-metal components; and
- a fluid actuator (26) for control of the second, clamping, element (24) having a body carried by the supporting structure (12), mounted slidably within which is a plunger connected to an actuation stem of the clamping element (24) having a main direction, said plunger defining within the body two chambers having two respective ports designed to operate selectively, one as inlet and the other as outlet, or vice versa, said ports being in communication, respectively, with two inlet and outlet fittings (28) for connection of flexible pipes (30) for feed and discharge of the fluid to/from the actuator,
said device being **characterized in that** set between said ports and said fittings (28) are passages (42) made in an auxiliary body associated to the body of the actuator (26),
**in that** said auxiliary body is constituted by at least one separate element, fixed to the body of the actuator,
**in that** said auxiliary body is constituted by a section (36) which is separate from, or in one piece with the body of the actuator and **in that** the aforesaid passages (42) are made in the longitudinal direction of the metal section, and
**in that** said metal section (36) is located at one side of the actuator parallel to the main direction (A) of the actuator via tubular screws (38), directed orthogonally to the longitudinal direction of the metal section, which engage the inlet and outlet ports of the fluid, setting in communication said ports, respectively, with the two passages made longitudinally in the metal section.

**2.** The clamping device according to Claim 3 or Claim 1, **characterized in that** made on an outer surface of the metal section is at least one longitudinal groove (44) for receiving cables (32) and/or auxiliary pipes of the clamping device.

**3.** The clamping device according to any one of Claims 1, 2, **characterized in that** the stretch of metal section (36) has the shape of a substantially flattened plate, with a face applied to one side of the actuator, the width of which is approximately the same as that of the side of the actuator.

**4.** The clamping device according to Claim 1, **characterized in that** a further metal section (36), set horizontally, is connected to a bottom end of the metal section (36) fixed to the side of the actuator (26) by means of tubular screws (38), the aforesaid tubular screws (38) setting in communication the respective passages (42) made longitudinally in both of the metal sections.

**5.** The clamping device according to Claim 1, **characterized in that** a protective band (48) made of flame-proof material is folded to form a sleeve and kept closed around the cables and pipes.

**6.** The clamping device according to Claim 1, **characterized in that** the fittings are both located in the proximity of a bottom portion of the body.

**7.** The clamping device according to Claim 1, **characterized in that** the supporting structure (12) incorporates integrally a protective casing (31) for protecting the service pipes and cables.

**8.** The clamping device according to Claim 7, **characterized in that** the supporting structure (12) comprises a metal body made of a single piece, including a base plate (12b), and a vertical plate (12a), which rises from the base plate (12b) and incorporates the aforesaid casing (31).

**9.** The clamping device according to Claim 6, **characterized in that** the base plate has an opening (51), through which the pipes and cables can be run underneath the base plate (12b) and the flooring (F).

**10.** The clamping device according to Claim 1, **characterized in that** a wire net (52) is set horizontally underneath the base plate (12b) and the flooring (F) and is set at a distance both from these and from the resting surface of the supporting structure on a floor for supporting the supply cables and/or pipes.
